Europäisches Patentamt

European Patent Office

Office européen des brevets

(11) Publication number: **0 061 896**
**B1**

# (12) EUROPEAN PATENT SPECIFICATION

(45) Date of publication of patent specification: **10.12.86**

(51) Int. Cl.⁴: **A 01 D 90/00**

(21) Application number: **82301563.1**

(22) Date of filing: **24.03.82**

(54) A forage harvester.

(30) Priority: **28.03.81 GB 8109799**

(43) Date of publication of application:
**06.10.82 Bulletin 82/40**

(45) Publication of the grant of the patent:
**10.12.86 Bulletin 86/50**

(84) Designated Contracting States:
**AT BE DE FR GB IT SE**

(56) References cited:
**AT-B- 243 177**
**CH-A- 535 532**

(73) Proprietor: **Teagle Machinery Limited**
**Blackwater**
**Truro Cornwall TR4 8HQ (GB)**

(72) Inventor: **Teagle, John**
**Rosemerryn Mithian**
**Cornwall (GB)**

(74) Representative: **Bryer, Kenneth Robert**
**Coosehecca Chacewater**
**Truro Cornwall TR4 8QU (GB)**

Courier Press, Leamington Spa, England.

**Description**

The present invention relates in general to forage harvesting apparatus, and in particular to forage harvesting apparatus capable of being converted for use as a general purpose trailer when not being used for forage harvesting.

Known forage harvesters comprise a mechanism for picking up the crop and for cutting and/or chopping the crop and conveying it to a container. This container may be on the forage harvester itself or may be on a separate trailer drawn alongside the forage harvester. As used in this specification the term "forage harvesting mechanism" will be understood to refer to a mechanism for picking up, cutting and/or chopping and conveying cut and/or chopped forage crop to a container. In Austrian Patent No. 243 177 there is described a machine arranged to be drawn by a separate tractor vehicle and comprising a trailer having a demountable forage harvester mechanism allowing the trailer to be used for other purposes. Both when used with the forage harvester mechanism, and when used without it, however, the trailer is fully supported on three or four wheels so as to transmit no load to the tractor coupling. This means that the trailer wheels must be steerable by a linkage to wheels on the forage harvester mechanism. Manoeuvring such a trailer is very difficult and the trailer is very complex. A demountable forage harvester is also shown in Swiss Patent No. 535,532 but this machine is self-propelled and is not a trailer.

The present invention seeks to provide forage harvesting apparatus in which a trailer of much simpler construction, which does not need the provision of steerable wheels is employed.

According to the present invention there is provided forage harvesting apparatus adapted to be drawn behind a tractor vehicle and to collect a forage crop in a container of the apparatus, comprising a trailer frame having a single axle or being close-coupled and carrying the container and a forage harvester mechanism removably attachable to the trailer frame and operable to deliver cut and/or chopped forage crop through delivery means on the mechanism when the machine is operated, the forage harvester mechanism being demountable from the trailer frame to allow the latter to be used as an independent trailer without the forage harvester mechanism, characterised in that the forage harvester mechanism is mounted on and carried by the trailer frame so that the latter carries the weight of said mechanism in that the trailer frame has attachment means by which the forage harvester mechanism is attached thereto, the said attachment means including means by which the forage harvester mechanism can be displaced between a raised transport position and a lowered working position, and in that the container is pivotally connected to the trailer frame at or adjacent the rear thereof so that the container is tippable with respect to the trailer frame, a fluid pressure actuator for controlling the inclination of the container with respect to the trailer frame being connected between the container and the said trailer frame.

The trailer part of the apparatus can thus be used as a general purpose trailer throughout the year and adapted for its forage harvesting purpose by the addition of the forage harvesting mechanism at the appropriate time. This avoids the necessity for the whole of the forage harvester to be idle throughout the year so that the capital invested in the machine can be better utilised.

As used herein the term "close-coupled" will be understood to refer to a trailer having a rigid trailer frame and two pairs of wheels on axles which are not pivotable with respect to the trailer frame for steering or cornering purposes, and the wheels of the two axles of which are sufficiently closely spaced in a longitudinal direction as to permit turning of the trailer without the need for such pivotting movement of the axles.

The forage harvesting mechanism must have means for coupling a suitable drive shaft thereto from the tractor and this coupling preferably accommodates changes in the position of the forage harvesting mechanism between a lowered, cutting position and a raised, transport position on the trailer chassis.

In one embodiment of the invention the wheeled support for the container comprises a single axle or close-coupled trailer frame having a chassis including a first chassis part on which the container is carried, and a second chassis part on which the forage harvesting mechanism is releasably mounted, the said second chassis part being movable with respect to the first chassis part between a first position in which the machine is adapted to receive and support the forage harvesting mechanism and a second position in which it is adapted for use as an independent single axle or close-coupled trailer.

This can be achieved, for example, by making the said second chassis part extendable longitudinally with respect to the first chassis part between the said first and second positions thereof. The longitudinal extension of the chassis is preferably provided by means of telescopically extendable longitudinal chassis members.

Conveniently, the said telescopically extendable longitudinal chassis members may be channel section members which can partly surround respective relatively fixed longitudinal members of the first chassis part which are carried by the wheels of the trailer vehicle.

The telescopically extendable longitudinal members and the fixed chassis members may be interconnected by a rack and pinion coupling mechanism so arranged that rotation of the pinion of the rack and pinion coupling mechanism causes relative longitudinal movement between the said fixed chassis members and the said extendable chassis members. The rack of the rack and pinion coupling mechanism may be formed on or carried by the fixed chassis members whilst the pinion cooperating therewith may be mounted so as to be rotatable on, but longitudinally fixed with respect to the extendable chassis members. Alternatively, however, the rack of the rack and pinion coupling may be secured on or formed by one or more of the extendable chassis members, whilst the or each pinion of the rack and pinion coupling may be mounted on one of the fixed chassis members for rotation therewith. Conveniently there are two longitudinally extendable chassis members, one on either side of the fixed part of the chassis itself, each being coupled to an associated longitudinal chassis member by a respective rack and pinion coupling, the pinions of the two rack and pinion couplings being mounted on a common shaft for rotation together.

Thus, when it is desired to use the machine for forage harvesting, the longitudinally movable chassis members are extended and locked in position to provide accommodation for the forage harvesting mechanism which can be mounted on suitable mounting brackets or plates provided on the movable chassis members. When forage harvesting is no longer required the cutter mechanism can be simply removed and the chassis retracted to enable the trailer to be used for any other purpose.

As in conventional fixed cutter forage harvesters the discharge of forage from the container may be effected either by tipping the container with respect to the chassis, or by means of a discharge conveyor located in the container. Preferably, however, the container is a tipping container since a screw discharge auger may constitute a disadvantage for use of the trailer for other purposes particularly if, for example, it may be desired to carry livestock in the trailer.

In an alternative embodiment of the invention a forage harvesting machine is characterised in that the wheeled support for the container comprises a single axle or close-coupled trailer frame having a chassis including a first chassis part on which the container is carried and a second chassis part on which the forage harvesting mechanism is mounted, the second chassis part including a towing coupling and being removably connected to the first chassis part, there being provided a third chassis part having a towing coupling thereon and which is interchangeable with the second chassis part to adapt the machine for use as an independent single axle or close-coupled trailer. The forage harvesting machine may be more particularly characterised in that the wheeled support is a close-coupled trailer frame and the said first chassis part includes a container support frame pivotally mounted on a twin-wheel bogie and there are provided means for locking the container support frame with respect to the bogie to prevent relative turning movement thereof in at least one directional sense. Conveniently, the said locking means include an adjustable wedge which can be interposed between a main frame member of the bogie and the container support frame of the first chassis part of the close-coupled trailer frame, on one side of the pivotal connection between the said container support frame and the bogie.

This latter embodiment may be further characterised in that the container is pivotally connected to the container support frame at or adjacent the rear thereof so that the container is tippable with respect to the chassis, a fluid pressure actuator for controlling the inclination of the container with respect to the chassis being provided, this actuator having a coupling by which it can be connected to a fluid pressure source on a tractor vehicle, means being provided for locking the container in an elevated or tipped position with respect to the chassis in sucha way that the trailer is balanced on the bogie when the locking wedge is interposed between the said container support frame and the bogie itself.

Two embodiments of the present invention will now be more particularly described, by way of example, with reference to the accompanying drawings, in which:

Figure 1 is a side view of a forage harvesting machine formed as a first embodiment of the present invention, showing the first trailer in its extended position;

Figure 2 is a side view of the machine illustrated in Figure 1, showing the trailer in its retracted position;

Figure 3 is a side view of a detail of the extending mechanism;

Figure 4 is a sectional view taken on the line IV—IV of Figure 3;

Figure 5 is a side view of a forage harvesting machine formed as a second embodiment of the present invention;

Figure 6 is a detail of the embodiment of Figure 5; and

Figure 7 is a further detail of the embodiment of Figure 5.

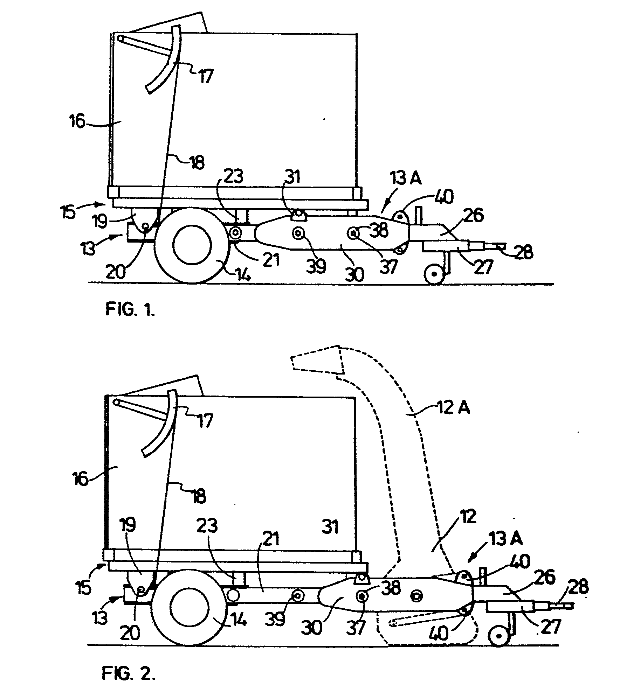

Referring now to Figures 1 to 4 of the drawings the machine illustrated generally comprises a trailer part, and a forage harvesting mechanism generally indicated 12. The forage harvesting mechanism can be one of a number of commercially available types and the construction of it will not be described in more detail herein as it does not form part of the present invention.

The trailer part comprises a lower chassis part generally indicated 13 mounted on a pair of ground-engaging wheels 14 and carrying an upper chassis part generally indicated 15 on which is mounted a container 16 having four generally upright sides and an open top. The rear wall of the container 16 is pivoted at its upper edge to the side walls, and can be swung open from the bottom by means of a lever arrangement 17 operated by a cord 18.

The upper chassis part 15 is pivoted to the lower chassis part 13 at the rear end thereof, for which purpose the upper chassis part carries two downwardly projecting lugs 19 which are rigidly secured to the upper chassis part 15 and pivoted to the lower chassis part 13 by pivots 20. Means (not shown) such as an hydraulic ram are connected between the upper and lower chassis parts forward of the road wheels 14 for controlling the angular orientation of the upper chassis part 15 with respect to the lower chassis part 13 whereby to effect tipping of the container 16 for emptying its contents when required. The cord 18 is secured at its lower end to the corner chassis part so that the rear wall or tail gate of the container 16 is opened automatically as the container 16 is tipped.

In addition, although again this is not shown, the container 16 could be provided with a screw auger or other conveyor for discharging its contents either laterally or rearwardly, for which purpose the container 16 would be provided with an opening and a discharge chute either in a side wall or in the rear wall.

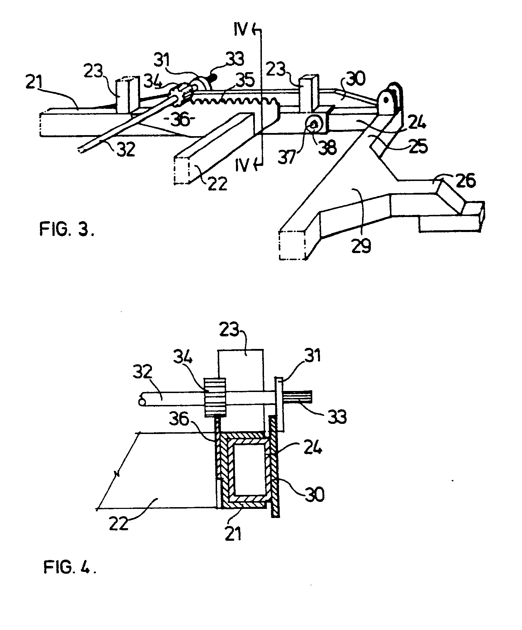

The lower chassis part 13 comprises two main longitudinal beam members 21 interconnected by a number of transverse struts 22, only one of which is shown in Figure 3. The beam members 21 are channel section members located with the open side of the channel facing outwardly, that is with the web of the channel facing the other longitudinal fixed beam member 21. The upper flange of the beam members 21 carries a plurality of spaced stub columns 23 which form supports for the longitudinal members of the upper chassis part 15 when this is lowered to its normal working position.

A forward portion 13a of the lower chassis part 13, is extendable with respect to the fixed portion carrying the ground engaging wheels 14, and comprises two box section longitudinal members 24 joined at their forward ends by a transverse strut 25 carrying a central forward projecting arm 26 to the lower side of which is connected a box section support 27 carrying a telescopically adjustable towing coupling 28 which, in the illustrated embodiment, comprises a ring for an agricultural coupling. The strut 26 is reinforced by triangular reinforcing plates 29 at its coupling with the transverse strut 25 to accommodate transverse loads.

The two longitudinally extendable box section members 24 are of dimensions to fit slidingly within the channel section fixed longitudinal members 21, and they carry reinforcement plates 30 on the outer faces thereof. Towards the rear end of the reinforcement plates 30 there are secured respective upstanding lugs 31 having aligned apertures through which passes a shaft 32 which is secured in one of the lugs and projects through the other with a splined end 33.

The shaft 32 carries a pair of straight cut pinions 34 at a position slightly inboard of the lugs 31, which pinions mesh with respective racks 35 formed on the upper edge of rack plates 36 which are secured to the inner faces of the fixed longitudinal chassis members 21 at positions slightly rearwardly of the forward end of these chassis members.

The longitudinal fixed chassis members 21, the extendable chassis members 24 and the reinforcement plates 30 have two sets of holes which are aligned with one another in the extended and retracted positions of the chassis. A bolt 37 passes through these aligned holes to fix the chassis in its extended or its retracted position. A suitable reinforcement plate is secured over the aligned holes in the form of a washer. A similar locking bolt is provided at the rear end of the reinforcement plate 30, and indicated 39 in the drawings.

In use of the apparatus, with the chassis in its extended position the forage harvesting mechanism can be mounted, on lugs 40 carried by the extendable part of the chassis for this purpose, and the equipment is then usable as a forage harvester to be towed, via the towing coupling 28, by a tractor vehicle which also drives the forage chopping mechanism via a power take-off shaft and coupling (not shown). During such use the forage chopping mechanism 12 cuts and chops the crop and delivers it through a chute 12a into the open upper end of the container 16 from which it can be discharged by tipping the container 16 on the upper chassis 15 with respect to the lower chassis 13.

When the machine is no longer required for forage harvesting the forage harvesting mechanism 12 can be removed from the lugs 40. The securing bolts 37, 39 can then be removed, and by means of a suitable tool engaged on the splined end 33 of the shaft 32 the two pinions 34 can be caused to rotate to carry them along the rack 35 on the rack plate 36. This causes the reinforcement plate 30 which carries the pinion via the shaft 32 and the lugs 31 to move rearwardly retracting the movable forward portion of the chassis and telescopically inserting the movable box section chassis members 24 rearwardly into the channel section fixed members 21. When retraction is complete the holes in the channel section members 21 and the box section members 24 are now re-aligned allowing the bolts 37, 39 to be re-inserted to lock the chassis 30 in its retracted condition permitting the trailer now to be used for other purposes, until it is again required for forage harvesting at the appropriate time in the subsequent season. Extension of the chassis follows exactly the reverse procedure described above for retraction, and the forage harvesting mechanism 12 can then be mounted on the chassis for use of the equipment as a forage harvester as before.

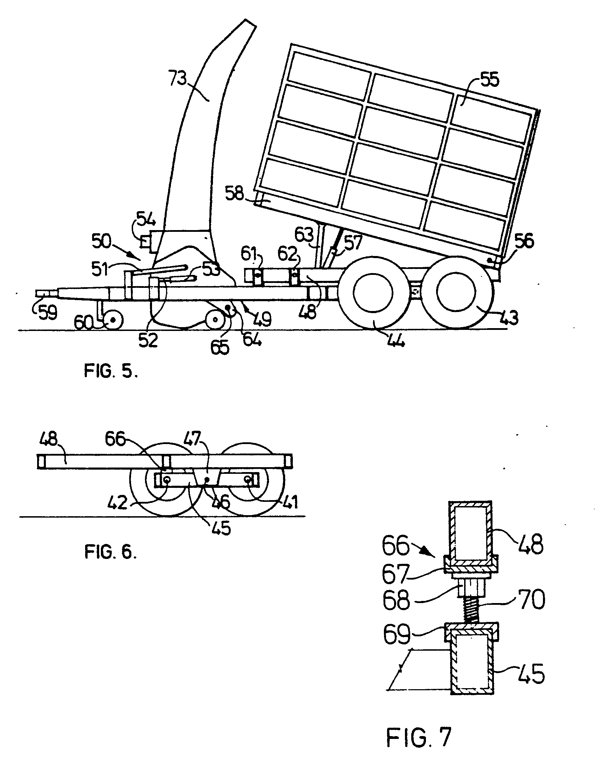

In the embodiment of Figures 5, 6 and 7, a forage harvester having a twin wheel bogie is illustrated. The bogie has two axles 41, 42 each with a respective pair of ground-engaging wheels 43, 44 at each end thereof. The axles are interconnected by respective main frame members 45 of the bogie, which are pivotally connected at an intermediate point 46 to a lug 47 carried by a fixed longitudinal member 48 of a chassis main frame.

In fact, the chassis is formed in two parts, a first part of which the frame member 48 constitutes a longitudinal beam, and a second part generally indicated 49 which supports a forage harvesting mechanism generally indicated 50 by means of a system of linkage levers 51, 52 which constitute a quadrilateral linkage between the forage harvester mechanism 50 and the second chassis part 49.

A fluid pressure actuator 53 interconnects the second chassis part 49 and the forage harvester mechanism 50, and extension and retraction of the actuator effects raising and lowering of the forage harvester mechanism 50 with respect to the chassis of the forage harvester machine. The quadrilateral linkage 51, 52 ensures that the forage harvesting mechanism is tilted slightly as it is raised so that a chute 73 is inclined slightly forwardly as the mechanism is raised and a coupling 54 for connection to a power take-off shaft of a tractor vehicle follows a curved path centred on the coupling point on a tractor vehicle so that raising and lowering of the forage harvesting mechanism can be effected with the tractor vehicle connected by the coupling shaft to the forage harvesting mechanism.

A container 55 in the form of an open sided box is pivotally mounted by a pivot 56 to the rear of the first chassis part 48 and a fluid pressure actuator 57, preferably a hydraulic actuator, interconnects the first chassis part 48 with a lower support frame 58 of the container 55.

The chassis of the forage harvester is thus formed in two parts, comprising the first chassis part 48 supported via the bogie on the ground engaging wheels 43, 44 and a second chassis part 49 which carries the forage harvesting mechanism 50 and includes a coupling attachment 59 for connecting the harvester to a towing vehicle (not shown) and a jockey wheel 60 for maintaining the harvester in a desired orientation when the forage harvesting mechanism 50 is in its raised position (so that the wheels of the forage harvesting mechanism are lifted from the ground) and the harvester is not coupled to a tractor vehicle. The positioning of ground-engaging wheels 43, 44 of the bogie in relation to the axial length of the harvester such that when in its transport condition a downward load within a certain predetermined range is applied by the coupling 59 on the tractor vehicle. For this reason the second chassis part 48 would normally tend to turn, in an anti-clockwise direction as viewed in Figures 5 and 6, about the pivot 46 with respect to the bogie frame member 45.

The second chassis part is connected to the first chassis part 48 by means of two lugs 61, 62 on each longitudinal frame member of the second chassis part 49, these having holes therein through which pass respective bolts which also pass through cooperating aligned holes (not shown) in the main frame members 48 of the first chassis part. A strut 63 pivotally mounted on the underside of the container support frame 58 is engagable on the first chassis part 48 to hold the container 55 in the tipped position in which it is illustrated in Figure 5, corresponding to extension of the hydraulic actuator 57 even when the connection to the fluid pressure source on the tractor vehicle is disconnected. This serves as a safety feature and reduces the sealing requirements on the coupling to the actuator 57. A plate 64 and locking pin 65 are provided for locking the forage harvesting mechanism 50 in its lowered position where its own ground-engaging wheels are in contact with the ground so that when the first and second trailer parts are separated by releasing the bolts passing through the holes in the lugs 61, 62 the second trailer part can be withdrawn and conveyed on these ground-engaging wheels and the jockey wheel 60.

In such conditions the first trailer part 48 would now turn about the pivot 46 with respect to the bogie 45 and, in order to prevent this an adjustable locking wedge 66 is provided, this being interpositioned between the forward end of the main bogie frame member 45 and the main frame member 48 of the chassis part. This moves the effective pivot point between the first chassis part and the bogie to a vertical position passing through the axis of the forward wheel 44 and the dimensions of the trailer are so chosen that the centre of gravity of the trailer with the container 55 tipped lies between this axle 42 and the pivot point 46 so that the trailer will remain balanced on the two ground-engaging wheels 43, 44.

A draw bar suitably shaped to span the free ends of the forwardly projecting main frame members 48 of the first chassis part, and itself constituting a third chassis part can now be positioned in substitution for the second chassis part carrying the forage harvesting mechanism 50. The same bolt holes as those which secure the lugs 61, 62 in position can be used for this third chassis part.

In Figure 7 the configuration of suitable adjustable locking wedge 66 is illustrated. This comprises a channel section upper support platform 67 having a downwardy projecting boss 68 with an internally threaded blind recess. An angle section foot 69 has an upwardly projecting threaded column 70 which is engaged in the blind threaded opening of the boss 68. The boss 68 is turnable with respect to the support platform 67 so that adjustment to the vertical separation between the foot 69 and the support platform 67 can be effected by turning the boss 68 with respect to column 70. For this purpose the boss 68 is conveniently provided with a hexagonal cross section for engagement with a conventional key or wrench. Adjustment can be effected, once the wedge is located in position, in order to ensure there is no slack in its position prior to separation of the bolts holding the lugs 61, 62 to the main frame members of the first chassis part 48; indeed, by slightly taking the weight of the main chassis part 48 release of the bolts holding the lugs 61, 62 can be facilitated.

Insertion of the wedge 66 is effected by introducing the platform 67 under the main beams 48 and sliding the angle section foot 69 which comprises a support platform and lateral flange sideways into engagement with the main longitudinal member 45 of the bogie.

## Claims

1. Forage harvesting apparatus adapted to be drawn behind a tractor vehicle and to collect a forage crop in a container (16, 55) of the apparatus, comprising a trailer frame (13; 48, 49) having a single axle or being close-coupled and carrying the container (16, 55) and a forage harvester mechanism (12; 50) removably attachable to the trailer frame (13; 48, 49) and operable to deliver cut and/or chopped forage crop through delivery means (73) on the mechanism when the machine is operated, the forage harvester mechanism being demountable from the trailer frame (13; 48, 49) to allow the latter to be used as an independent trailer without the forage harvester mechanism (12; 50), characterised in that the forage harvester mechanism (12; 50) is mounted on and supported by the trailer frame so that the frame carries the weight of said mechanism, in that the trailer frame (48, 49) has attachment means (51, 52, 53) by which the forage harvester mechanism is atached thereto, the said attachment means (51, 52, 53) including means by which the forage harvester mechanism (50) can be displaced between a raised transport position and a lower working position, and in that the container (55) is pivotally connected to the trailer frame at or adjacent the rear thereof so that the container (55) is tippable with respect to the trailer frame (48, 49), a fluid pressure actuator (57) for controlling the inclination of the container (55) with respect to the trailer frame (48, 49) being connected between the container (55) and the said trailer frame.

2. Forage harvesting apparatus as claimed in Claim 1, characterised in that the trailer frame (48, 49) is formed in two chassis parts, a first part (48) of which is carried on ground-engaging wheels (43, 44) of the trailer and a second chassis part (49) of which carries the forage harvester mechanism (50), the said second chassis part (49) having coupling means (59) for attachment to a towing vehicle, and being extendable longitudinally with respect to the first chassis part (13) between a first position in which the trailer frame is adapted to receive and support the forage harvesting mechanism (13) and a second position in which it is adapted for use as an independent single axle or close-coupled trailer.

3. Forage harvesting apparatus as claimed in Claim 2, characterised in that the said second chassis part (13a) has members (24) which are telescopically extendable with respect to cooperating members (21) of the first chassis part (13).

4. Forage harvesting apparatus as claimed in Claim 3, characterised in that the telescopically extendable longitudinal chassis members (24), and the said cooperating members (21) of the first chassis part are interconnected by a rack and pinion coupling (34, 35) such that rotation of the pinion (34) of the rack and pinion coupling (34, 35) causes relative longitudinal movement between said cooperating members (21) of the first chassis part and the said telescopically extendable longitudinal chassis members (24).

5. Forage harvesting apparatus as claimed in Claim 1, characterised in that instead of being longitudinally extendable the said second chassis part (49) including the towing coupling (59) is removably connected to the first chassis part (48), there being provided a third chassis part having a towing coupling thereon and which is interchangeable with the second chassis part (49) to adapt the machine for use as an independent single axle or close-coupled trailer, the said third chassis part being adapted to be carried in use of the trailer between the tractor vehicle and the said first chassis part (48) when attached thereto, out of contact with the ground.

6. Forage harvesting apparatus as claimed in Claim 5, characterised in that the first said chassis part (48) of the trailer frame is pivotally mounted on a twin-wheel bogie (45) and there are provided locking means (66) for selectively preventing relative turning movement of the container support frame (48) with respect to the bogie (45) in at least one directional sense.

7. Forage harvesting apparatus as claimed in Claim 6, characterised in that the said locking means (66) comprises an adjustable wedge which can be interposed between a main frame member (45) of the bogie and the second chassis part of the trailer frame (48) on one side of the pivotal connection (46) between the said trailer frame (48) and the bogie.

8. Forage harvesting apparatus as claimed in Claim 7, characterised in that the said actuator (57) between the container (55) and the trailer frame (48, 49) has a coupling for connection to a fluid pressure source on a tractor vehicle, means (63) being provided for locking the container (55) in an elevated or tipped position with respect to the chassis (48, 49) in such a way that the trailer is balanced on the bogie (45) when the locking wedge (66) is interposed between the said container support frame (48) of the chassis and the bogie (45).

9. Forage harvesting apparatus as claimed in Claim 7, or Claim 8, characterised in that the adjustable locking wedge (66) comprises an upper support platform (67) of channel section shaped to receive a member of the container support frame (48) of the first part of the chassis, a lower foot member (69) having a lateral locating flange for cooperatively engaging the said main frame member (45) of the bogie, an externally threaded column (70) secured to one of the said upper support platforms (67) and the said lower foot member (69), and an internally threaded housing (68) engaged on the said threaded column (70) and secured to the other of the said upper support platform (67) and the said lower foot member (69).

**Patentansprüche**

1. Futter-Ernte-Apparat so bearbeitet, um hinter einem Traktor-Fahrzeug gezogen zu werden, und um eine Futter-ernte in einem Container (16, 55) des Apparates zu sammeln, der aus einem Anhänger-Chassis (13; 48, 49) besteht, um den Container (16, 55) zu tragen, und aus einem Futter-Ernte-maschinen-Mechanismus (12; 50), ablösbar an das Anhängar-Chassis anzubringen und verwendbar, um geschnittene und/oder zerhackte Futterernte mit Hilfe von Beförderungsvorrichtungen (73) auf dem Mechanismus, wenn die Maschine in Betrieb ist, zu befördern, wobei der Futter-Erntemaschinen-Mechanismus (12; 50) von dem Anhänger-Chassis (13; 48, 49) abmontierbar ist, um zu ermöglichen, daß letzteres zum eigenständigen Anhänger ohne den Futter-Erntemaschinen-Mechanismus (12; 50) umgeändert werden kann, dadurch gekennzeichnet, daß das Anhänger-Chassis nur eine Achse hat oder engverkuppelt wird und das Gewicht des Futter-Erntemaschinen-Mechanismus (12; 50) trägt, wenn letzteres darauf montiert ist, und zwar dadurch, daß das Anhänger-Chassis (48, 49) Befestigungsvorrichtungen hat, mit denen der Futter-Erntemaschinen-Mechanismus daran befestigt wird, wobei die besagten Befestigungsvorrichtungen (51, 52, 53) Vorrichtungen haben, mit denen der Futter-Erntemaschinen-Mechanismus (50) zwischen einer angehobenen Transportstellung und einer niederen Arbeitsstellung verlagert werden kann, und dadurch, daß der Container (55) drehbar an oder seitlich der Rückseite des Anhänger-Chassis angebracht ist, so daß der Container (55) im Bezug aud das Anhänger-Chassis kippbar ist, wobei ein Flüssigkeitsantrieb (57) zur Kontrolle der Schrägung des Containers (55) im Bezug zu Anhänger-Chassis (48, 49) zwischen dem Container (55) und dem besagten Anhänger-Chassis angebracht wird.

2. Futter-Erntemaschinen-Mechanismus, wie beansprucht im Rechtsanspruch 1, dadurch gekennzeichnet, daß das Anhänger-Chassis (48, 49) aus zwei Teilen zusammengesetzt ist, einem ersten Chassis-Teil (48), das auf boden-fassenden Rädern (43, 44) des Anhängers getragen wird, und einem zweiten Chassis-Teil (49), das den Futter-Erntemaschinen-Mechanismus (50) trägt, wobei das besagte zweite Chassis-Teil (49) Kupplungsvorrichtungen (59) zur Anbringung an ein Schlepp-Fahrzeug hat, und wobei es im Bezug auf das erste Chassis-Teil (13) der Länge nach ausziehbar ist, und zwar zwischen einer ersten Stellung, in der Anhänger-Chassis so bearbeitet ist, daß es den Futter-Erntemaschinen-Mechanismus (50) empfängt und stützt, und einer zweiten Stellung, in der es zum Gebrauch als eigenständiger Einzel-Achsel oder eng-verkuppelter Anhänger verwendet werden kann.

3. Futter-Erntemaschinen-Mechanismus, wie beansprucht im Rechtsanspruch 2, dadurch gekennzeichnet, daß das zweite Chassis-Teil (13a) Teile (24) hat, die im Bezug zu den zugehörigen Teilen (21) des ersten Chassis-Teiles (13) teleskopisch ausziehbar sind.

4. Futter-Erntemaschinen-Mechanismus, wie beansprucht im Rechtsanspruch 3, dadurch gekennzeichnet, daß die teleskopisch ausziehbaren längs-verlaufenden Chassis-Teile (24), und die besagten zugehörigen Teile (21) des ersten Chassis-Teiles miteinander durch eine Zahnstangen-Kupplung (34, 35) verbunden werden, und zwar so, daß die Rotation des Zahnrades der Zahnstangen-Kupplung (34, 35) eine relative Längsbewegung zwischen den besagten zugehörigen Teilen (21) des ersten Chassis-Teiles und den besagten teleskopisch ausziehbaren längs-verlaufenden Chassis-Teilen (24) bewirkt.

5. Futter-Erntemaschinen-Mechanismus, wie beansprucht im Rechtsanspruch 1, dadurch gekennzeichnet, daß statt der Länge nach ausziehbar zu sein das besagte zweite Chassis-Teil (49) einschließlich der Abschlepp-Kupplung (59) ablösbar mit dem ersten Chassis-Teil (48) verbunden ist, wobei dort ein drittes Chassis-Teil zu Verfügung steht, das eine Abschlepp-Kupplung besitzt, und das mit dem zweiten Chassis-Teil (49) auswechselbar ist, um die Maschine zum Gebrauch zum eigenständigen Einzel-Achsel-oder eng-verkuppelter Anhänger umändern zu können, wobei das besagte dritte Chassis-Teil so umgeändert wird, daß es bei Gebrauch des Anhängers zwischen dem Traktor-Fahrzeug und dem ersten Chassis-Teil (48), wenn damit verbunden, ohne Bodenkontakt getragen werden kann.

6. Futter-Erntemaschinen-Mechanismus, wie beansprucht im Rechtsanspruch 5, dadurch gekennzeichnet, daß das besagte erste Chassis-Teil (48) des Anhänger-Chassis drehbar auf einem doppel-rädrigen Drehgestell (45) befestigt wird, und dort steht eine Rastenarretierung (66) zu Verfügung, um wahlweise, im Bezug auf das Drehgestell (45) in mindestens einem Richtungssinn eine relative Drehbewegung des Trag-Gestelles des Containers zu verhindern.

7. Futter-Erntemaschinen-Mechanismus, wie beansprucht im Rechtsanspruch 6, dadurch gekennzeichnet, daß die besagte Rastenarretierung (66) einen einstellbaren Keil hat, der zwischen einem Teil des Hauptrahmens (45) des Drehgestelles und dem zweiten Chassis-Teil des Anhänger-Chassis (48) auf einer Seite der drehbaren Verbindung (46) zwischen dem besagten Anhänger-Chassis (48) und dem besagten Drehgestell eingefügt werden kann.

8. Futter-Erntemaschinen-Mechanismus, wie beansprucht im Rechtsanspruch 7, dadurch gekennzeichnet, daß der besagte (57) Antrieb zwischen dem Container (55) und dem Anhänger-Chassis (48, 49) eine Kupplung zur Verbindung mit einer Flüssigkeitsdruckquelle auf einem Traktor-Fahrzeug hat, wobei eine Rastenarretierung (63) zur Verfügung steht, um den Container (55), im Bezug zum Chassis (48, 49) in einer angehobenen oder gekippten Position festzuhalten, und zwar so, daß der Anhänger auf dem Drehgestell (45) balanciert wird, wenn der Sperrkeil (66) zwischen dem besagten Container-Fahrgestell des Chassis (48) und dem Drehgestell eingefügt wird.

9. Futter-Ernte-Apparat, wie beansprucht im Rechtsanspruch 7, oder Rechtsanspruch 8, dadurch gekennzeichnet, das der vestellbare Sperrkeil (66) eine obere Lagerfläche mit Doppel-T-Profil (67) hat, so geformt um einen Teil des ersten Chassis-Teiles des Anhänger-Chassis (48) aufzunehmen; ein unteres Fußteil (69), das einen seitlichen Führungsrand hat, um den besagten Teil des Hauptrahmens (45) des Drehgestelles, zusammen mit einer Stützsäule mit Außengewinde (70) aufzunehmen, die an eine der besagten oberen Lagerflächen (67) und dem besagten unteren Fußteil (69) angebracht ist, und ein Gehäuse, (68) mit Innengewinde, das auf den besagten Gewindebolzen (70) aufgesetzt ist und an der anderen der besagten oberen Lagerflächen (67) und dem besagten unteren Fußteil (69) befestigt wird.

## Revendications

1. Dispositif pour la récolte du fourrage adapté à être traîné par un tracteur et à la récolte du fourrage dans un récipient (16, 55) du dispositif, comprenant un châssis de remorque (13; 48, 49) portant le récipient (16, 55) et un mécanisme pour la récolte du fourrage (12; 50), capable d'être attaché à et détaché du châssis de la remorque (13; 48, 49) et opérable à livrer le fourrage coupé et/ou haché par le moyen de livraison (73) sur le mécanisme lors de la marche de la machine, le mécanisme pour la récolte du fourrage étant détachable du châssis de la remorque (13; 48, 49) afin de permettre à celui-ci d'être utilisé comme une remorque indépendante sans le mécanisme pour la récolte du fourrage (12; 50), caractérisé par le fait que le châssis de la remorque est fourni ou d'un seul essieu ou de deux essieux très proches et qu'il porte le poids du mécanisme pour la récolte du fourrage (12; 50) lorsque celui-ci y est supporté, que le châssis de la remorque (48, 49) est fourni d'un moyen de fixation (51, 52, 53) par lequel le mécanisme pour la récolte du fourrage y est attaché, le dit moyen de fixation (51, 52, 53) comprenant un moyen par lequel le mécanisme pour la récolte du fourrage (50) peut être déplacé entre une position route levée et une position travail plus basse, et que le récipient (55) est attaché sur pivot au châssis de la remorque à ou près de son arrière de sorte que le récipient (55) puisse être basculé relativement au châssis de la remorque (48, 49), un operateur de pression fluide (57) pour contrôler l'inclination du récipient (55) relativement au châssis de la remorque (48, 49) étant reliés entre le récipient (55) et le dit châssis de la remorque.

2. Dispositif pour la récolte du fourrage selon la revendication 1, caractérisé par le fait que le châssis de la remorque (48, 49) est fabriqué en deux parties, dont une première partie (48) est portée sur des roues (43, 44) de la remorque qui touchent le sol et dont une deuxieme partie (49) porte le mécanisme (50) pour la récolte du fourrage, la dite deuxième partie du châssis comportant des moyens de fixation (59) pour l'attacher à une véhicule de remorquage, capable d'être extensible longitudinalement relativement à la première partie du châssis (13) entre une première position dans laquelle le châssis de la remorque est adapté pour recevoir et pour porter le mécanisme (13) pour la récolte du fourrage et une deuxième position dans laquelle il est adapté pour être utilisé comme une remorque indépendante à un seul essieu ou a deux essieux très proches.

3. Dispositif pour la récolte la récolte du fourrage selon la revendication 2, caractérisé par le fait que la dite deuxième partie (13a) du châssis comporte des organes (24), extensibles d'une façon télescopique relativement à des organes collaborateurs (21) de la première partie (13) du châssis.

4. Dispositif pour la récolte du fourrage selon la revendication 3, caractérisé par le fait que les organes longitudinaux (24) du châssis, extensibles d'une façon télescopique, et les dits organes collaborateurs (21) de la première partie du châssis sont liés par une crémaillère (34, 35) de sorte que la rotation du pignon (34) de la crémaillère (34, 35) produit du mouvement relatif longitudinal entre les dits organes collaborateurs (21) de la première partie du châssis et les dits organes (24) longitudinaux du châssis extensibles d'une façon télescopique.

5. Dispositif pour la récolte du fourrage selon la revendication 1, caractérisé par le fait qu'au lieu d'être extensible dans une direction longitudinale, la dite deuxième partie (49) du châssis, y compris l'attelage de remorque (59) est rattaché à, mais détachable de, la première partie (48) du châssis, il y a une troisième partie du châssis avec un attelage de remorque dessus, qui est interchangeable avec la deuxième partie (49) du châssis afin d'adapter la machine comme une remorque indépendante à un seul essieu ou à deux essieux très proches, la dite troisième partie du châssis étant adapté d'être portée, la remorque en usage, entre le tracteur et la dite première partie (48) du châssis lorsqu'elle y est attachée, sans toucher le sol.

6. Dispositif pour la récolte du fourrage selon la revendication 5, caractérisé par le fait que la première partie (48) du châssis de la remorque est montée sur pivot sur un bogie à deux roues (45) et qu'il y à des moyens de bloquage (66) pour empêcher à volonté le tournement relatif du châssis (48) du récipient relatif au bogie (45) dans au moins une direction.

7. Dispositif pour la récolte du fourrage selon la revendication 6, caractérisé par le fait que le dit moyen de bloquage (66) comporte une cale réglable capable d'être introduite entre un principal organe (45) du châssis du bogie et la deuxième partie du châssis (48) de la remorque d'un côté de l'attelage sur pivot (46) entre le dit châssis de la remorque (48) et le bogie.

8. Dispositif pour la récolte du fourrage selon la revendication 7, caractérisé par le fait que le dit opérateur (57) entre le récipient (55) et le châssis de la remorque (48, 49) est muni d'un attelage pour le raccord à une source de pression fluide sur un tracteur, y comportant un moyen (63) pour bloquer le récipient (55) dans une position élevée ou basculée relativement au châssis (48, 49) de sorte que la remorque est tenue en équilibre sur le bogie (45) lorsque la cale de bloquage (66) est introduite entre le dit châssis de soutient (48) du récipient du châssis et le bogie (45).

9. Dispositif pour la récolte du fourrage selon la revendication 7 ou la revendication 8, caractérisé par le fait que la cale réglable de bloquage (66) comporte une plate-forme de soutient supérieure (67) en coupe de canal façonée pour recevoir un organe du châssis de soutient (48) du récipient de la première partie du châssis, un organe de pied inférieur (69) qui comporte une aile de repere latérale pour engager en collaboration avec le dit principal organe (45) du châssis du bogie, une colonne (70) filetée à l'extérieur fixée ou à la plate-forme de soutient supérieure (67) ou au dit organe de pied inférieur (69), et un boîtier (68) fileté à l'intérieur engagé avec la dite colonne filetée (70) et attaché à l'autre de la dite plate-forme de soutient supérieure (67) et au dit organe de pied inférieur (69).

FIG. 1.

FIG. 2.

1

FIG. 3.

FIG. 4.

FIG. 5.

FIG. 6.

FIG. 7